Europäisches Patentamt

European Patent Office

Office européen des brevets

(19)

(11) Publication number: **0 053 440**
**A1**

(12) # EUROPEAN PATENT APPLICATION

(21) Application number: **81305293.3**

(22) Date of filing: **06.11.81**

(51) Int. Cl.³: **D 01 F 6/76, C 08 L 61/20**

(30) Priority: **01.12.80 GB 8038538**

(43) Date of publication of application: **09.06.82**
**Bulletin 82/23**

(84) Designated Contracting States: **AT BE CH DE FR GB IT LI NL SE**

(71) Applicant: **IMPERIAL CHEMICAL INDUSTRIES PLC, Imperial Chemical House Millbank, London SW1P 3JF (GB)**

(72) Inventor: **Martin, Graham Ernest, 15 Warcop Close, Nunthorpe Middlesbrough Cleveland (GB)**

(74) Representative: **Gratwick, Christopher et al, Imperial Chemical Industries PLC Legal Department: Patents Thames House North Millbank, London SW1P 4QG (GB)**

(54) **Amino-formaldehyde resin fibres.**

(57) Fibres are made by spinning from amino-formaldehyde resin solutions containing a mixture of fast- and slow-acting curing catalysts.

EP 0 053 440 A1

## Amino-formaldehyde resin fibres

This invention relates to the production of fibres from amino-formaldehyde resins.

In our UK Patent Specification 1573116 we describe a process for the production of such fibres wherein a mixture of an amino-formaldehyde resin in liquid form, e.g. an aqueous solution of a urea-formaldehyde resin, and a resin-curing catalyst, and optionally a spinning aid such as polyethylene oxide, is fed to a rotating spinning cup and centrifugally spun therefrom as fibres.

Amino-formaldehyde resin fibres are of use as insulating fibres and also in the production of paper-like products, generally in admixture with another fibrous material such as cellulose pulp. For such applications the amino-formaldehyde resin fibres generally have to be subjected to a post-spinning curing operation to increase the degree of cure to the desired level, usually in excess of 92%, and preferably above 96%.

In the present invention the degree of cure may conveniently be assessed by determining the proportion of fibre dissolved in water under specified conditions. A suitable procedure is to accurately weigh a sample, approx 5 g, of the dry fibre and digest the sample with 200 ml of water for 2 hours at 50°C. The undissolved fibre is recovered by filtration, dried in air at 100°C for 2 hours and weighed. The degree of cure is defined as the ratio of the recovered fibre to the original sample weight.

Curing of the resin is effected by heating the fibres, which contain a resin-curing catalyst added to the resin solution prior to spinning. With the catalysts conventionally employed, e.g. ammonium salts such as ammonium sulphate, ammonium dihydrogen phosphate, diammonium hydrogen phosphate, curing is generally carried out at below 190°C, and in particular at temperatures within the range 130-180°C. The use of higher temperatures with such catalysts often results in an undesirable yellowing of the cured fibre. It is desirable to increase the degree of cure and/or reduce the time taken to achieve the requisite degree of cure. Thus with catalysts such as ammonium sulphate, the time required to achieve the requisite degree of cure may be relatively long, typically of the order of 30 min or more at 150°C.

Another problem encountered with such conventional catalysts is that they are active to some extent at much lower temperatures than those employed during curing. Thus even at ambient temperatures they may cause gelation of the resin within a few minutes.

In this specification the gel time is determined with a standard Tecam Gel Timer using a mixture of the resin and catalyst solutions maintained at the test temperature. The gel time is herein defined as the time taken for the resin to set when measured from the instant that mixing of the resin and catalyst solutions is initiated, both solutions having been previously heated to the test temperature. The resin is considered to have set when the motion of the Gel Timer plunger is arrested by the rapid thickening of the resin.

Rapid gelation times at the spinning temperature are undesirable as there is a risk that the resin will start to gel, and hence block, the spinning cup. Even if the resin is spun from a cooled spinning cup, e.g. at 40°C, there is a risk that such blockage will occur within the cup. Likewise, even if the resin and catalyst components are mixed at ambient temperatures, e.g. 22°C, there is a risk that blockage will occur during a holdup in the spinning operation as may inevitably happen from time to time.

Some catalysts, herein termed slow-acting catalysts, show little activity at low temperatures but have appreciable activity at temperatures above 100°C. By the term slow-acting catalyst we mean a catalyst that, when mixed with an aqueous urea-formaldehyde resin solution of formaldehyde:urea molar ratio 2:1 in an amount of between 0.5 and 1.0% by weight of the resin solids to give a solution having a resin solids content of about 60% by weight, gives a mixture having a gel time of at least 400 minutes at 40°C and a gel time of less than 250 minutes at 70°C.

Examples of such slow-acting catalysts include some of the water soluble salts of metals such as zinc, magnesium, calcium, or aluminium with acids such as nitric, sulphuric, phosphoric, and acetic acids.    Zinc nitrate is a particularly suitable slow-acting catalyst.

In the production of fibres by the process described in aforesaid UK patent specification 1573116, the fibres spun from the rotating spinning cup are contacted with a stream of hot air which serves to dry the fibres, i.e. physically stabilise them, and to transport them to a collection zone.    The fibres are then subjected to a post-spinning heating step to effect curing of the resin.    Some curing of the resin is effected by the hot air stream.    However the degree of curing effected by this hot air stream when using slow-acting catalysts is generally much less than when using conventional fast-acting catalysts such as ammonium sulphate.    This results   in problems during the post-spinning curing process.    Thus if such less cured fibres are heated in an oven at 120 to 180$^o$C to effect curing, while curing may be more rapid than with the conventional fast-acting acid or acid salt catalysts, there is a tendency for the fibres to adhere to one another.    Such fibre fusion often can not be avoided even by drying the fibres for prolonged periods of time at temperatures between 50 and 100$^o$C prior to heating in the curing oven.

We have found that by the use of a mixture of slow-acting catalyst and a fast-acting catalyst these problems may be overcome.

Accordingly we provide a process for the production of amino-formaldehyde resin fibres comprising spinning fibres from an amino-formaldehyde resin solution containing at least 0.2%, based on the weight of the resin solids, of a catalyst mixture comprising a slow-acting catalyst and a fast-acting catalyst, the amount of slow-acting catalyst being 25 to 90% by weight of the total catalyst weight and the weight of fast-acting catalyst being at least 0.1% by weight of the amino-formaldehyde resin solids, and curing said fibres by heating at a temperature above 100$^o$C.

Preferably the amount of slow-acting catalyst is at least 0.2% by weight, based on the weight of the resin solids.

By the term fast-acting catalyst we mean a catalyst that, when mixed with an aqueous urea-formaldehyde resin solution of formaldehyde:urea molar ratio 2:1 in an amount of between 0.5 and 1.0% by weight of the resin solids to give a solution having a resin solids content of about 60% by weight, gives a mixture having a gel time of less than 80 minutes at 40°C and less than 10 mins at 70°C.    Examples of such fast-acting catalysts include acids such as sulphuric, sulphamic, phosphoric, nitric or formic acids, and ammonium salts thereof.

The total amount of catalyst employed is preferably the minimum that will achieve the desired degree, and rate, of curing at the desired curing temperature.    The amount of fast-acting catalyst employed is preferably the minimum that is necessary to avoid fusion of the fibres during the curing step.

The use of the catalyst mixtures enables short curing times to be employed to obtain high degrees of cure, without adhesion of the fibres to one another during the curing step.    It also increases the gelation time at ambient and spinning temperatures compared to the use of equivalent amounts of the fast-acting catalyst alone. This is advantageous in that, if desired, higher spinning temperatures can be used.    Heretofore when using fast-acting catalysts as the sole catalysts, spinning temperatures below 50°C generally have had to be employed to avoid premature gelling of the resin in the spinning cup.    By spinning temperature we mean the equilibrium temperature of the spinning cup in operation.

In order to produce high quality fibres free of "shot", the viscosity of the spinning solution has to be carefully controlled within a relatively narrow range for any given spinning cup arrangement.    Such a viscosity requirement limits the usable range of resin solids content of the spinning solution.    To increase the amount of fibres that can be produced from any given spinning cup, it would be desirable to use more concentrated spinning solutions.    As the viscosity of a liquid tends to decrease with

0053440

B.31594

increasing temperature, when using the catalyst mixtures in accordance with the present invention it may be possible to raise the spinning temperatures, from the normal ambient temperature as used heretofore, to a temperature in the range 50 to $90^{\circ}$C depending on the proportion of fast-acting catalyst in the catalyst mixture. This enables more concentrated spinning solutions to be employed. It will be appreciated that, as the proportion of fast-acting catalyst increases, the gel time of the catalysed resin solution at any given temperature will decrease. The maximum spinning temperature that may be used will thus decrease as the proportion of fast-acting catalyst increases. We prefer that the spinning temperature is below that at which the catalysed resin mixture has a gel time of 10 minutes.

The fibres are spun from a solution of the resin and catalysts in a suitable solvent. The solvent is preferably water, but alternatively may be any solvent which is relatively volatile at the temperatures to which the fibres are subjected after spinning.

The amino-formaldehyde resin employed in a condensate of an amino compound with formaldehyde. Some of the formaldehyde may be replaced by a higher aldehyde such as acetaldehyde. The amino compound is prefarably a polyamine, particularly urea and/or melamine. In order that the resin is water soluble, so that water can be used as the solvent, the amino compound is preferably urea, alone or in admixture with up to 5% by weight of melamine. It is preferred that the molar ratio of aldehyde to amino groups is between 0.6:1 and 1.5:1, preferably between 0.7:1 and 1.3:1.

In order to improve the spinning properties of the resin solution, it is preferred to incorporate into the solution a small amount of a spinning aid such as a thermoplastic polymer that is soluble in the solvent employed. Examples of suitable water soluble polymers that may be used include polyvinyl alcohol and polyethylene oxide. The amount of thermoplastic polymer used is preferably 0.01 to 5% by weight of the amino-formaldehyde resin solids. The addition of the spinning aid has an effect on the diameter of the fibres produced: if too little spinning aid is employed an undue amount of shot is liable to be produced. For economic reasons the amount of spinning aid employed is preferably the minimum that is required to produce fibres of the desired diameter characteristics. The effectiveness of the thermoplastic polymer spinning aid also depends on the molecular weight of the thermoplastic polymer. The lower the molecular weight the more spinning aid that is required: at high molecular weights the fibre diameter distribution may be unduly broad. Thermoplastic polymers, such as polyethylene oxide, having a weight average molecular weight within the range 100,000 to 600,000 are particularly suitable.

Because the gel time of resin solutions containing the fast-acting catalysts may be relatively short, even at ambient temperatures, it is desirable to incorporate at least the fast-acting catalyst into the resin solution just before the spinning solution is fed to the spinning cup. This is conveniently effected by mixing the resin solution with a solution containing the fast-acting catalyst. The resin solution generally has a much higher viscosity than a solution of the catalyst in the solvent. In order that the resin solution can be efficiently mixed with the catalyst solution it is preferred that the catalyst solution has its viscosity and elasticity increased by incorporation of at least part of the spinning aid (which has the effect of increasing the viscosity and elasticity). We have observed that the catalyst and resin solutions do not mix well in static in-line mixers unless at least some of the spinning aid has been added to the catalyst solution. For convenience it is preferred that all of the spinning aid is included in the catalyst solution added to the resin solution.

With some catalyst combinations, particularly where the slow-acting catalyst is a metal salt, there is a risk that an insoluble salt will be formed by reaction of the slow-acting catalyst with the fast-acting catalyst. Thus with zinc nitrate as the slow-acting catalyst and a phosphate, e.g. ammonium dihydrogen phosphate, as the fast-acting catalyst, zinc phosphate may be precipitated. It has been found that such catalyst combinations may be successfully employed if the slow-acting catalyst is added to the resin solution whilst the solution of the fast-acting catalyst containing the spinning aid is added to, and mixed with, the resin/slow-acting catalyst solution, e.g. by an in-line mixer, just prior to spinning.

The resin solids content of the spinning solution, i.e. after admixture of the resin solution with the catalysts and spinning aid, is preferably at least 40% by weight and is generally below 65% by weight although higher resin solids contents, e.g. up to 75% by weight, may be used if elevated spinning temperatures are employed.

The spinning solution is fed to a rapidly rotating spinning cup. The cup is preferably a hollow vessel having one or more spinning surfaces and is preferably mounted for rotation about a substantially vertical axis. For example the cup may be open ended and the spinning surface comprises the end of the open cup wall. Alternatively the cup wall may be provided with a plurality of spinning surfaces in the form of perforations.

The fibres are spun from the cup into a gaseous environment in which they attenuate. This attenuation may be effected partially by inertia and partially by the effect of the flow of the gaseous environment. The fibres are preferably drawn out to a mean diamter of the order of 1 to $50\mu$m, particularly below $20\mu$m. The attenuated fibres are then contacted with a stream of hot air to dry and physically stabilise the fibres. The temperature and rate of flow of the hot air stream must be sufficient to dry the attenuated fibres to render them non-sticky. The temperature of the hot air is preferably in the range 100 to $350^{o}$C. Conveniently the hot air may simply be ambient air heated to the desired temperature without any drying step.

The dried fibres are then cured, as described hereinbefore, by heating, e.g. in an oven, at above $100^{o}$C, preferably at temperatures in the range 130 to $180^{o}$C.

Fibres produced by the process of the invention are of particular utility as thermal insulating materials. They are also of utility in paper manufacture either as the sole fibrous constituent or in admixture with cellulosic fibres, e.g. conventional mechanical or chemical pulp, or other synthetic fibrous materials, e.g. glass or polyolefin fibres.

The invention is illustrated by the following examples in which all parts and percentages are expressed by weight.

In the following examples, the spinning solutions were made by mixing 6 parts of a catalyst solution of the requisite concentration with 78 parts of the resin solution. However gel times were assessed by measuring the gel time of a mixture of 6 parts of the catalyst solution with 96 parts of the resin solution and 4 parts of water. Where a mixed catalyst system is employed, in order to measure the gel time three parts of the slow acting catalyst solution are mixed with 96 parts of the resin solution and 4 parts of water and then 3 parts of the fast-acting catalyst solution were added. In this case the gel time is timed from the addition of the fast acting catalyst solution.

EXAMPLE 1 (comparative)

A spinning solution was formed by mixing 6 parts of an aqueous catalyst solution, having a viscosity of 7.6 centipoise, containing 6.66% of ammonium sulphate and 1.66% of polyethylene oxide of weight average molecular weight 600,000, with 78 parts of an aqueous urea-formaldehyde resin solution having a formaldehyde:urea molar ratio of 2:1, a solids content of 65%, and a viscosity of 50 poise. Both viscosity measurements were made at 23°C using a shear rate of 74.6 sec$^{-1}$. The catalyst, ammonium sulphate, was thus 0.79% of the resin solids. The catalyst solution gave a gel time of 13 min at 40°C and 3 min at 70°C.

The spinning solution was centrifugally spun into an atmosphere at 70°C by the process described in UK Patent Specification 1573116 into fibres using a perforated spinning cup of 12 cm diameter having 24 perforations of 3 mm width spaced around its periphery rotating at 4000 rpm. The total spinning solution feed rate to the cup was 84 g/min. Samples of the fibres, which had an average diameter of 12 $\mu$m were cured by heating in an oven at various temperatures for various times. The degree of cure, which is shown in the following table, was measured by the technique hereinbefore described.

| Curing time min | Degree of cure % | | |
|---|---|---|---|
| | 150 | 200 | 220 |
| 5 | 83.5 | | |
| 10 | 93.8 | | 98.7* |
| 15 | 93.8 | 97.8* | |
| 20 | 93.7 | | |
| 30 | 94.6 | | |

* samples yellowed

### EXAMPLE 2 (comparative)

Example 1 was repeated using zinc nitrate in place of ammonium sulphate. The catalyst solution had a gel time of over 500 min at 40°C and of 211 min at 70°C.

The fibres were spun as in Example 1. A sample of the fibres was cured at 150°C for 30 min. Another sample was dried for 12 hours at 50°C prior to curing at 150°C. A further sample was gradually heated from 60°C to 150°C prior to curing for 30 min at 150 150°C. In all cases the fibres collapsed and fused together during curing.

### EXAMPLE 3

Example 1 was repeated using a spinning solution containing 0.79% zinc nitrate and 0.2% ammonium sulphate, based on the resin solids. The spinning solution was made by mixing 3 parts of a zinc nitrate solution with 78 parts of the resin solution and then adding 3 parts of a solution of the ammonium sulphate and polyethylene oxide to the resin/zinc nitrate solution. The catalysed resin solution had the following gel times (measured from the time of addition of the ammonium sulphate/polyethylene oxide solution).

| Temp °C | Gel time (min) |
|---|---|
| 22 | 105 |
| 40 | 29.4 |
| 70 | 3.7 |

The spinning solution was spun into fibres as described in Example 1 and the fibres cured for various times at various temperatures.    The degree of cure is reported in the following
table.

| Curing time min | Curing temp | Degree of cure % | | |
|---|---|---|---|---|
| | | 150°C | 170°C | 180°C |
| 5 | | 97.1 | 98.6 | |
| 10 | | 98.8 | 98.8 | 99.0 |
| 15 | | 99.1 | | 98.9 |
| 20 | | 100 | | |

In none of these cases did the fibres fuse together.    Neither
was any yellowing of fibres detected.    It is thus seen that the use of
the catalyst mixture enables higher degress of cure to be obtained more
rapidly than when using ammonium sulphate alone (as in Example 1).

### EXAMPLE 4

Example 3 was repeated using a 0.1% ammonium sulphate instead
of 0.2%.    The catalysed resin solution had a gel time of 8.3 min
at 70°C.    The fibres collapsed and fused on curing at 150°C for 30 min.
but collapse and fusion could be avoided by heating the fibres
gradually from 60°C to 150°C over a period of 2 hours prior to curing
at 150°C for 30 min.    The degree of cure was 98.5%.

### EXAMPLE 5

Example 3 was repeated using 1.58% zinc nitrate instead of
0.79%.    After curing for 30 min at 150°C the degree of cure was 97.9%.
The fibres did not fuse on curing.

### EXAMPLE 6

The procedure of Example 3 was repeated using ammonium
dihydrogen phosphate, diammonium hydrogen phosphate, and triammonium
phosphate in place of ammonium sulphate.    The fibres were cured at
150°C for various times (t min).    The catalyst composition of the
spinning solution (% on resin solids), catalysed resin solution gel
times at 40°C, and degrees of cure are shown in the following table.

| Catalyst composition | | | Gel time (min) | Degree of cure % | | | | |
|---|---|---|---|---|---|---|---|---|
| $Zn(NO_3)_2$ | fast acting catalyst | | | t=5 | t=10 | t=15 | t=20 | t=30 |
| 0 | 0.79 ) | ammonium dihydrogen phosphate | 16.5 | 92.6 | 92.4 | 91.7 | 97.8 | 98.1 |
| 0.26 | 0.53 ) | | 20.0 | 96.7 | 97.8 | 98.4 | 98.7 | 99.0 |
| 0.53 | 0.26 ) | | 26.7 | 97.1 | 97.6 | - | - | 99.2 |
| 0 | 0.79 ) | diammonium hydrogen phosphate | 25.6 | 95.1 | 97.3 | 97.4 | 98.6 | 98.9 |
| 0.26 | 0.53 ) | | 34.0 | 97.1 | 97.0 | 97.3 | 99.0 | 99.5 |
| 0.53 | 0.26 ) | | 43.4 | 97.8 | 98.4 | 98.7 | 99.2 | 99.8 |
| 0 | 0.79 ) | triammonium phosphate | 37.5 | 97.8 | 98.2 | 97.3 | 98.0 | 98.8 |
| 0.26 | 0.53 ) | | 46.9 | 97.9 | 97.2 | 97.6 | 98.7 | 99.3 |
| 0.53 | 0.26 ) | | 47.1 | 98.2 | 99.1 | 99.2 | 99.1 | 99.4 |

### EXAMPLE 7

The procedure of Example 3 was repeated using ammonium formate in place of ammonium sulphate to give spinning solutions having the catalyst contents (% on resin solids) shown in the following table together with the catalysed resin gel times at 40°C and degree of cure after curing the fibres for 30 mins at 150°C.

| ammonium formate % | zinc nitrate % | gel time (min) | degree of cure % |
|---|---|---|---|
| 0.79 | 0 | 53.3 | 85.9 |
| 1.58 | 0 | 42.7 | 91.0 |
| 1.58 | 0.12 | 30.0 | 91.8 |
| 1.58 | 0.23 | 28.5 | 94.3 |
| 1.58 | 0.35 | - | 95.8 |
| 1.58 | 0.58 | - | 96.3 |

PA/CG/AR
2.11.81

1.       A process for the production of amino-formaldehyde resin fibres comprising spinning fibres from an amino-formaldehyde resin solution containing at least 0.2%, based on the weight of the resin solids, of a catalyst mixture comprising a slow-acting catalyst and a fast-acting catalyst, the amount of slow-acting catalyst being 25 to 90% by weight of the total catalyst weight, and the weight of the fast-acting catalyst being at least 0.1% by weight of the amino-formaldehyde resin solids, and curing said fibres by heating at a temperature above 100°C.

2.       A process according to claim 1 wherein the amount of slow-acting catalyst is at least 0.2% by weight, based on the weight of the resin solids.

3.       A process according to claim 1 or claim 2 wherein the fast-acting catalyst is selected from sulphuric, sulphamic, phosphoric, nitric, and formic acids and ammonium salts thereof.

4.       A process according to any one of claims 1 to 3 wherein the slow-acting catalyst is a water-soluble salt of a metal selected from zinc, magnesium, calcium and aluminium with an acid selected from nitric, sulphuric, phosphoric and acetic acids.

5.       A process according to claim 4 wherein the slow-acting catalyst is zinc nitrate.

6.       A process according to any one of claims 1 to 5 wherein said amino-formaldehyde resin solution is spun into fibres at a temperature at which the catalyst containing resin solution has a gel time of at least 10 minutes.

7.       A process according to any one of claims 1 to 6 wherein the amino-formaldehyde resin solution has a thermoplastic polymer selected from polyvinyl alcohol and polyethylene oxide dissolved therein.

8.       A process according to claim 7 in which the amino-formaldehyde resin solution containing the fast- and slow-acting catalysts is made by mixing a solution of the amino-formaldehyde resin with a solution containing at least the fast-acting catalyst and at least part of said thermoplastic polymer.

9.      A process according to claim 8 in which the slow-acting catalyst is incorporated into the amino-formaldehyde resin solution prior to mixing the amino-formaldehyde resin solution with the solution containing the fast-acting catalyst.

10.     A process according to any one of claims 1 to 9 wherein the fibres are cured by heating at temperatures in the range 130 to 180°C.

## DOCUMENTS CONSIDERED TO BE RELEVANT

| Category | Citation of document with indication, where appropriate, of relevant passages | Relevant to claim |
|---|---|---|
| Y | FR - A - 2 268 044 (B.I.P.) <br><br> * Claims * <br><br> --- | <br> 1-10 |
| Y | CHEMICAL ABSTRACTS, vol. 82, no. 12, June 16, 1975, abstract no. 157189j, page 35 <br> COLUMBUS, OHIO (US) <br> & JP - A - 74 99 191 (NITTO CHEMICAL INDUSTRY CO. Ltd.) <br> (19-09-1974) <br><br> * The whole abstract * <br><br> --- | <br><br><br><br><br><br><br> 1-10 |
| Y | FR - A - 2 203 847 (PIERREFITTE) <br><br> * Claims * <br><br> --- | <br> 1-10 |
| Y | CH - A - 300 907 (PFERSEE) <br><br> * Claims * <br><br> --- | <br> 1-10 |
| D,Y | FR - A - 2 383 249 (I.C.I.) <br><br> * Claims * <br><br> ----- | <br> 1-10 |

**CLASSIFICATION OF THE APPLICATION (Int. Cl. 3)**

D 01 F  6/76
C 08 L 61/20

**TECHNICAL FIELDS SEARCHED (Int.Cl. 3)**

D 01 F  6/76
C 08 L 61/20
61/24
61/28

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 12-03-1982 | DERAEDT |

EPO Form 1503.1  06.78